# EUROPEAN PATENT SPECIFICATION

(11) **EP 2 057 527 B1**
(45) Date of publication and mention of the grant of the patent: **22.05.2013**
(21) Application number: 07805486.3
(22) Date of filing: 15.08.2007
(51) Int. Cl.: G06F 3/048

(54) **GESTURE DETECTION FOR A DIGITIZER**
GESTENDETEKTION FÜR EINEN DIGITALISIERER
DÉTECTION DE GESTE POUR UN NUMÉRISEUR GRAPHIQUE

(30) Priority: 15.08.2006 US 837630 P
(43) Date of publication of application: 13.05.2009
(73) Proprietor: N-trig Ltd., 44643 Kfar-Saba (IL)
(72) Inventor: PERSKI, Haim, 45309 Hod-hasharon (IL)
(74) Representative: Dennemeyer & Associates S.A.
(86) International application number: PCT/IL2007/001025
(87) International publication number: WO 2008/020446

(56) References cited:
- EP-A- 1 555 601
- WO-A-2005/121938
- WO-A-2006/006173
- US-A1- 2002 180 797
- US-A1- 2005 093 868

## Description

### FIELD OF THE INVENTION

The present invention relates to a digitizer, and more particularly to stylus and fingertip touch sensitive digitizers.

### BACKGROUND OF THE INVENTION

Touch technologies are commonly used as input devices for a variety of products. The usage of touch devices of various kinds is growing sharply due to the emergence of new mobile devices such as Personal Digital Assistants (PDA), tablet PCs and wireless flat panel displays (FPD). Some of these devices are not connected to standard keyboards, mice or like input devices, which are deemed to limit their mobility. Instead there is a tendency to use touch input technologies of one kind or another. A stylus and/or finger may be used as a user interaction. One or more pre-defined gestures with the stylus or finger may be supported to convey specific user commands to the system.

US Patent No. 6,791,536, entitled "Simulating Gestures of a Pointing Device using a Stylus and Providing Feedback Thereto", assigned to Microsoft Corporation, describes a system and method for simulating gestures using a stylus and choosing an action to be performed in response to the stylus gesture.

US Patent No. 6,690,156 entitled "Physical Object Location Apparatus and Method and a Platform using the same" and US Patent Publication No. 20040095333 entitled "Transparent Digitizer" both of which are assigned to N-trig Ltd., describe an electro-magnetic method for locating physical objects on a FPD and a transparent digitizer that can be incorporated into an electronic device, typically over the active display screen. The digitizer sensor includes a matrix of vertical and horizontal conducting lines to sense an electric signal. Positioning the physical object at a specific location on the digitizer provokes a signal whose position of origin may be detected.

U.S, Patent Application Publication No. 20040155871 entitled "Touch Detection for a Digitizer" assigned to N-trig Ltd, describes a digitizing tablet system capable of detecting position of physical objects and/or fingertip touch using the same sensing conductive lines. Simultaneous position detection of physical objects and fingertip is supported. Typically, the system includes a transparent sensor overlaid on a FPD. The digitizer's sensor includes a matrix of vertical and horizontal conducting lines to sense an electric signal. Touching the digitizer in a specific location provokes a signal whose position of origin may be detected.

U.S. Patent Application Publication No. 20060012580, entitled "Automatic switching for a dual mode digitizer" assigned to N-Trig, describes a method handling different types of user interactions, e.g. electromagnetic stylus and finger touch, in a digitizer system. In some examples, a gesture is used to indicate a switch between user interactions.

International Patent Publication No. WO2006/006173, entitled "Automatic Switching for Dual Mode Digitizer" assigned to N-Trig, describes an apparatus for detecting a plurality of user interactions. The apparatus includes at least one detector for sensing the user interactions, a respective controller, associated with each of the detectors, for finding positions of the user interactions, and a switcher associated with the controller for handling the user interactions, according to a defined policy. It is described that if the user interaction is is a stylus, the digitizer supports full mouse emulation. As long as the stylus hovers above the screen, a mouse cursor follows the stylus position. Touching the screen with the stylus stands for left click and a dedicated switch located on the stylus emulates right click operation.

### SUMMARY OF THE INVENTION

An aspect of some embodiments of the invention is the provision of a digitizer system and a method for distinguishing between gesture input signals and other digitizer generated signals that are not intended to be interpreted as a pre-defined gesture. As used herein the term gesture is a purposeful pre-defined motion that a user makes to indicate a command to the system. Implementation of gestures for interacting with the digitizer system can be used to increase the functionality of the system and increase speed of a user's interaction with the system.

According to some embodiments of the present invention, a method is provided for detecting and/or implementing a gesture where the gestures is a combination event including a finger touch and a stylus. Gestures supported by known systems are performed with a single user interaction, e.g. a stylus and/or finger. The number of pre-defined gestures (and thus, actions or operations) that can be defined with a single user interaction may be limited. In addition, an input signal from pre-defined gestures performed with a single user interaction may at times be mistaken for a regular input signal not intended to be defined as a gesture and/or for another pre-defined gesture.

According to some embodiments of the present invention, combination gestures are defined and implemented for conveying pre-defined user input data and/or commands to the digitizer system. Combination gestures are defined as pre-defined gestures including two different types of user interactions, e.g. both finger and stylus user interaction or multiple unconnected motions of one or both of a stylus and finger, performed simultaneously or sequentially. Optionally, the stylus user interaction can be replaced by another type of user interaction, e.g. a game piece and used to define and/or convey a combination gesture. Optionally, the finger user interaction can be replaced by an alternate body part user interaction, e.g. a hand user interaction. For example a combination gesture including input signals from game piece and user's hand may be defined.

According to some embodiments of the present invention, a combination gesture is a pre-defined finger and stylus event performed substantially simultaneously. According to some embodiments, a combination gesture is a pre-defined finger event and stylus event performed sequentially, e.g. a finger event directly followed by a stylus event or a stylus event directly followed by a finger event. In some exemplary embodiments one event, e.g. finger or stylus, follows the other event of the combination within a pre-defined time period. According to some exemplary embodiments, pre-defined finger and/or stylus events that are used to make up a combination gesture may include either hover and/or touch interaction with the digitizer.

According to some embodiments of the present invention, a combination gesture is a two part combination gesture, where one user interaction is used to perform the gesture that defines the user specified command, e.g. copy, paste, shift, zoom, while the other user interaction defines a parameter of the command, e.g. the text to be copied or pasted, letters to be typed in capital and, zoom level. According to some exemplary embodiments, the first user interaction performing the gesture and the second user interaction specifying a parameter of the gesture are pre-defined, e.g. by the user and/or the system. In some exemplary embodiments, the elements and/or events of the two part combination gesture is performed substantially simultaneously. In some exemplary embodiments, the events of two part combination gesture are performed sequentially, e.g. first by the first user interaction performing the gesture and immediately afterwards by the second user interaction specifying a parameter of the gesture.

According to some embodiments of the present invention, detection of a combination finger and stylus user input, triggers gesture detection, e.g. with a gesture recognition engine, to identify the detected event as a pre-defined gesture. The detected combination finger and stylus input signal may be compared to a database of pre-defined combination gestures for identification. Typically, successful identification provokes execution of a command associated with the identified pre-defined gesture. Optionally, identification and/or recognition of a gesture may be conveyed to the user prior to executing corresponding command associated with the identified gesture. Optionally, failure to recognize a gesture as a pre-defined gesture is conveyed to the user. Optionally, gestures may be pre-defined and/or user defined based on a pre-defined set of rules.

An aspect of some embodiments of the present invention provides for a method for detecting combination gestures with a digitizer, the method comprising storing a database of pre-defined combination gestures, wherein the combination gestures includes input from two different types of user interactions, detecting a combination event, wherein the combination event includes input from the two different types of user interactions, and matching input from the combination event to a pre-defined gesture from the database of pre-defined combination gestures.

Optionally, at least part of the input from the two different types of user interactions of the combination gesture is detected substantially simultaneously.

Optionally, the input from the two different types of user interactions of the combination gesture is detected sequentially.

Optionally, a gesture performed with one of the two different types of user interactions is associated with a pre-defined user command and the input from the other type of user interaction is associated with a parameter of the pre-defined user command.

Optionally, the two different types of user interactions include a body part and an inanimate object.

Optionally, the body part is selected from a group consisting of a finger and a hand.

Optionally, the inanimate object is selected from a group consisting of a stylus and a game piece.

Optionally, the inanimate object is a conductive object.

Optionally, the inanimate object is an electromagnetic object.

Optionally, the object includes passive circuitry that can be excited by an external excitation source.

Optionally, at least part of the input is input derived from touching the digitizer.

Optionally, at least part of the input is input derived from hovering over the digitizer.

Optionally, the method comprises requesting verification from a user that a matched combination gesture from the pre-defined combination gesture is an intended combination gesture.

Optionally, the method provides conveying recognition of the combination gesture to a user.

Optionally, at least one pre-defined combination gesture in the database is a user defined combination gesture.

Optionally, at least one pre-defined combination gesture in the database is a system pre-defined combination gesture.

Optionally, the method comprises executing a command indicated by the pre-defined gesture from the database.

An aspect of some embodiments of the present invention provides for a method for detecting combination gestures with a digitizer, the method comprising storing a database of pre-defined combination gestures, wherein the combination gestures includes input from two different types of user interactions, detecting a combination event, wherein the combination event includes input from the two different types of user interactions, matching input from one type of user interaction of the two different type of user interactions with a pre-defined gesture associated with a pre-defined user command, and matching input from the other type of user interaction with a parameter value associated with the pre-defined user command.

Optionally, the two different types of user interactions include a body part and an inanimate object.

Optionally, the body part is selected from a group consisting of a finger and a hand.

Optionally, the inanimate object is selected from a group consisting of a stylus and a game piece.

Optionally, input from the body part is matched with the pre-defined gesture and wherein input from the inanimate object is matched with the parameter value.

Optionally, input from the inanimate object is matched with the pre-defined gesture and wherein input from the body part is matched with the parameter value.

Optionally, the input from the two different types of user interactions is performed substantially simultaneously.

Optionally, the input from the two different types of user interactions is performed one after the other.

An aspect of some embodiments of the present invention provides for system for detecting combination gestures with a digitizer system, the digitizer system comprising at least one digitizer configured for detecting input from two different types of user interactions, and a memory unit configured for storing a database of pre-defined combination gestures, wherein the pre-defined combination gestures are associated with pre-defined user commands, and a controller configured for matching input from the two different types of user interactions with a pre-defined combination gesture from the database.

Optionally, the memory unit is integral to the digitizer.

Optionally, the controller is integral to the digitizer.

Optionally, the controller includes functionality of a gesture recognition engine.

Optionally, the digitizer is configured to detect hovering of at least one of the two different types of user interactions.

Optionally, the digitizer is configured to detect touch of at least one of the two different types of user interactions.

Optionally, the two different types of user interactions include a body part and an inanimate object.

Optionally, the body part is selected from a group consisting of a finger and a hand.

Optionally, the inanimate object is selected from a group consisting of a stylus and a game piece.

Optionally, the inanimate object includes passive circuitry that can be excited by an external excitation source.

Optionally, the digitizer is configured for capacitive-based detection.

Optionally, the system comprises a host computer, wherein the host computer is configured to receive input from the digitizer.

Optionally, the controller is integral to the host computer.

Optionally, the memory unit is integral to the host computer.

Optionally, the pre-defined combination gestures are interpreted as pre-defined user commands to the host computer.

Optionally, at least part of the input from the two different types of user interactions of the combination gesture is detected substantially simultaneously.

Optionally, the input from the two different types of user interactions of the combination gesture is detected sequentially.

Optionally, wherein the digitizer comprises a digitizer sensor and wherein the input from the two different types of user interactions is detected from the digitizer sensor.

Optionally, the digitizer sensor comprises a patterned arrangement of conducting lines and wherein input from the two types of user interactions are detected from at least one conducting line of the patterned arrangement of conducting lines.

Optionally, the digitizer comprises at least two digitizer sensors wherein the two different types of user interactions are detected from different digitizer sensors from the at least two digitizer sensors.

Optionally, the system comprises a plurality of digitizers wherein the two different types of user interactions are detected from different digitizers from the plurality of digitizers.

### BRIEF DESCRIPTION OF THE DRAWINGS

The subject matter regarded is particularly and distinctly claimed in the concluding portion of the specification. Non-limiting examples of embodiments of the present invention are described below with reference to figures attached hereto, which are listed following this paragraph. In the figures, identical structures, elements or parts that appear in more than one figure are generally labeled with a same symbol in all the figures in which they appear. Dimensions of components and features shown in the figures are chosen for convenience and clarity of presentation and are not necessarily shown to scale. For example, the dimensions of some of the elements may be exaggerated relative to other elements for clarity.
Figure 1 is an exemplary simplified block diagram of a digitizer system in accordance with some embodiments of the present invention;
Figure 2 is an exemplary simplified circuit diagram for touch detection based on a capacitive touch method according to some embodiments of the present invention;
Figure 3 is an exemplary simplified circuit diagram of a digitizer sensor including differential amplifiers according to some embodiments of the present invention;
Figure 4 is a schematic illustration of a digitizer sensor for finger touch detection based on a junction capacitive touch method, according to some embodiments of the present invention;
Figures 5A and 5B are exemplary 'zoom in' and 'zoom out' combination gestures using stylus and finger touch according to some embodiments of the present invention;
Figures 6A and 6B are exemplary 'scroll down' and 'scroll up' combination gestures using stylus and finger touch according to some embodiments of the present invention;
Figures 7A and 7B are exemplary 'rotate clockwise' and 'rotate counter-clockwise' combination gestures using stylus and finger touch according to some embodiments of the present invention;
Figures 8A and 8B showing an exemplary combination gesture that can be distinguished from a similar single user interaction gesture according to some embodiments of the present invention; and
Figure 9 showing an exemplary two stage combination gesture according to some embodiments of the present invention;
Figure 10 is an exemplary flow chart of a method for recognizing a combination gesture according to some embodiments of the present invention.

It will be appreciated that for simplicity and clarity of illustration, elements shown in the figures have not necessarily been drawn to scale. Further, where considered appropriate, reference numerals may be repeated among the figures to indicate corresponding or analogous elements.

### DETAILED DESCRIPTION OF EXEMPLARY EMBODIMENTS

In the following description, exemplary, non-limiting embodiments of the invention incorporating various aspects of the present invention are described. For purposes of explanation, specific configurations and details are set forth in order to provide a thorough understanding of the embodiments. However, it will also be apparent to one skilled in the art that the present invention may be practiced without the specific details presented herein. Furthermore, well-known features may be omitted or simplified in order not to obscure the present invention. Features shown in one embodiment may be combined with features shown in other embodiments. Such features are not repeated for clarity of presentation. Furthermore, some unessential features are described in some embodiments.

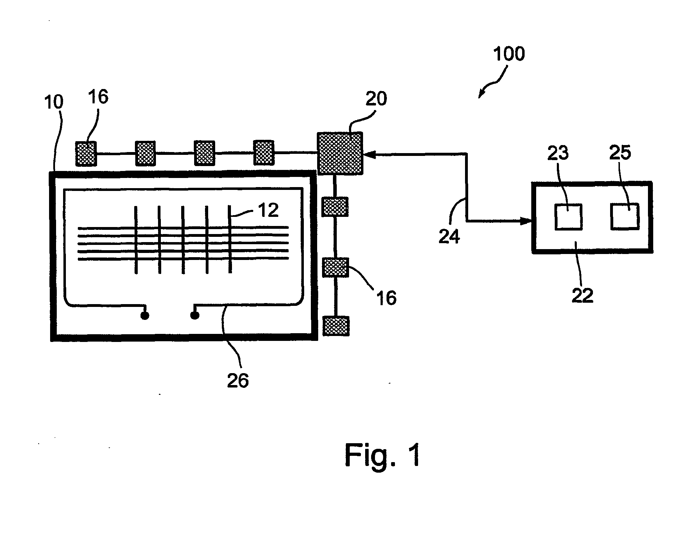

Reference is now made to Fig. 1 showing an exemplary simplified block diagram of a digitizer system in accordance with some embodiments of the present invention. The digitizer system 100 shown in Fig. 1 may be suitable for any computing device that enables interactions between a user and the device, e.g. mobile computing devices that include, for example, FPD screens. Examples of such devices include Tablet PCs, pen enabled lap-top computers, PDAs or any hand held devices such as palm pilots and mobile phones. According to some embodiments of the present invention, the digitizer system comprises a sensor 12 including a patterned arrangement of conducting lines, which is optionally transparent, and which is typically overlaid on a FPD 10. Typically sensor 12 is a grid based sensor including horizontal and vertical conducting lines.

An ASIC 16 comprises circuitry to process and sample the sensor's output into a digital representation. The digital output signal is forwarded to a digital unit 20, e.g. digital ASIC unit, for further digital processing. According to some embodiments of the present invention, digital unit 20 together with ASIC 16 serve as the controller of the digitizer system and/or have functionality of a controller and/or processor. The outcome, once determined, is forwarded to a host 22 via an interface 24 for processing by the operating system or any current application. According to some embodiments of the present invention, control functionality is additionally or exclusively included in the host 22. ASIC 16 and digital unit 20 may be provided as a single ASIC. According to some embodiments of the present invention, digital unit 20 together with ASIC 16 include memory and/or memory capability.

According to some embodiments of the present invention, sensor 12 comprises a grid of conductive lines made of conductive materials, optionally Indium Tin Oxide (ITO), patterned on a foil or glass substrate. The conductive lines and the foil are optionally transparent. Typically, the grid is made of two layers, which are electrically separated from each other. Typically, one of the layers contains a set of equally spaced parallel conductors and the other layer contains a set of equally spaced parallel conductors orthogonal to the set of the first layer. Typically, the parallel conductors are equally spaced straight lines, and are input to amplifiers included in ASIC 16. Optionally the amplifiers are differential amplifiers. Typically, the parallel conductors are spaced at a distance of approximately 2-8 mm, e.g. 4mm, optionally depending on the size of the FPD and a desired resolution. Optionally the region between the grid lines is filled with a non-conducting material having optical characteristics similar to the conducting lines, to mask the presence of the conducting lines.

Typically, ASIC 16 is connected to outputs of the various conductors in the grid and functions to process the received signals at a first processing stage. As indicated above, ASIC 16 typically includes an array of amplifiers, e.g. differential amplifiers, to amplify the sensor's signals. Additionally, ASIC 16 optionally includes one or more filters to remove irrelevant frequencies. Optionally, filtering is performed prior to sampling. The signal is then sampled by an A/D, optionally filtered by a digital filter and forwarded to digital ASIC unit, for further digital processing. Alternatively, the optional filtering is fully digital or fully analog.

According to some embodiments of the invention, digital unit 20 receives the sampled data from ASIC 16, reads the sampled data, processes it and determines and/or tracks the position of physical objects, such as stylus, and/or finger, touching the digitizer sensor. According to some embodiments of the present invention hovering of an object, e.g. stylus, finger and hand, is also detected and processed by digital unit 20. Calculated position is sent to the host computer via interface 24.

According to some embodiments, digital unit 20 produces and manages a triggering pulse to be provided to an excitation coil 26 that surrounds the sensor arrangement and the display screen. The excitation coil provides a trigger pulse (in the form of an electric or electromagnetic field) that excites passive circuitry in the stylus to produce a response from the stylus that can subsequently be detected.

According to some embodiments, digital unit 20 produces and sends a triggering pulse to at least one of the conductive lines.

According to some embodiments of the invention, host 22 includes at least a memory unit 23 and a processing unit 25 to store and process information obtained from ASIC 16. Memory and processing capability is also generally included in digital unit 20 and ASIC 16. According to some embodiments of the present invention memory and processing functionality may be divided between any two or three of host 22, digital unit 20, and ASIC 16 or may reside in only one of them.

According to some embodiments of the present invention the digitizer system may include one or more digitizers associated with a single host 22. In some exemplary embodiments the digitizer includes at least the digitizer sensor 12, ASIC units 16 and digital unit 20.

### Stylus Detection

According to some embodiments of the present invention, the stylus is a passive element. Optionally, the stylus comprises a resonant circuit, which is triggered by excitation coil 26 to oscillate at its resonant frequency. At the resonant frequency, the circuit produces oscillations that continue after the end of the excitation pulse and steadily decay. While the stylus touches and/or hovers over digitizer 20, the decaying oscillations induce a voltage in nearby conductive lines which are sensed by sensor 12. Alternatively, the stylus may include an energy pick-up unit and an oscillator circuit.

According to some embodiments of the present invention, two parallel sensor lines that are close but not adjacent to one another are connected to the positive and negative input of a differential amplifier respectively. The amplifier is thus able to generate an output signal which is an amplification of the difference between the two sensor line signals. An amplifier having a stylus on one of its two sensor lines will produce a relatively high amplitude output. Stylus detection is described with further details, for example in US Patent Application Publication 20040095333.

### Finger Touch Detection

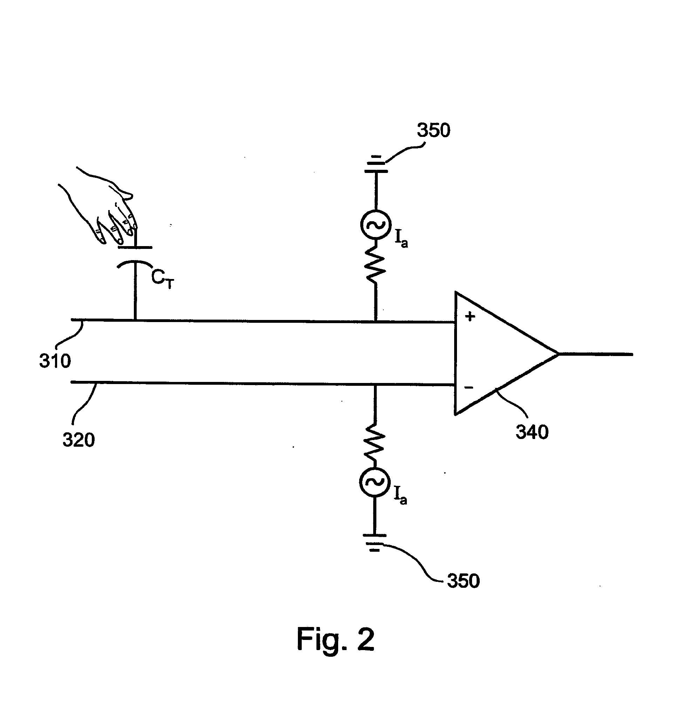

Reference is now made to Fig. 2 showing an exemplary circuit diagram for touch detection according to some embodiments of the present invention. Conductive lines 310 and 320 are parallel non-adjacent lines of sensor 12. According to some embodiments of the present invention, conductive lines 310 and 320 are interrogated to determine if there is a finger input signal derived from finger touch and/or finger hovering. To query the pair of conductive lines, a signal source Iₐ, e.g. an AC signal source induces an oscillating signal in the pair. Signals are referenced to a common ground 350. When a finger is placed on one of the conductive lines of the pair, a capacitance, C_{T}, develops between the finger (either touching or hovering over the digitizer) and conductive line 310. As there is a potential between the conductive line 310 and the user's finger, current passes from the conductive line 310 through the finger to ground. Consequently a potential difference is created between conductive line 310 and its pair 320, both of which serve as input to differential amplifier 340. Finger touch detection is described with further details in, for example incorporated US Patent Application Publication 20040155871. Typically parasitic capacitance develops between the display screen and the conductive lines of the overlaying digitizer sensor. Typically parasitic capacitance induces a current leakage into the conductive lines of the digitizer referred to as a "steady noise" and/or steady state noise. In an ideal environment, the parasitic capacitance and therefore the steady state noise level in each of the lines are expected to be identical. However, in practice slight differences in distance between the digitizer and screen, material structure in specific areas of the digitizer screen, environmental conditions and parasitic capacitance on associated PCB, may affect the parasitic capacitance level between the screen and some of the lines. The unbalanced capacitance creates an unbalance steady state noise level of the lines. A system and method for balancing capacitance is described in US Patent Application Publication No. 20070268272, entitled "Variable Capacitor Array" which is assigned to the common assignee. The systems and methods described in US Patent Application Publication No. 20070268272. may be applied to the present invention.

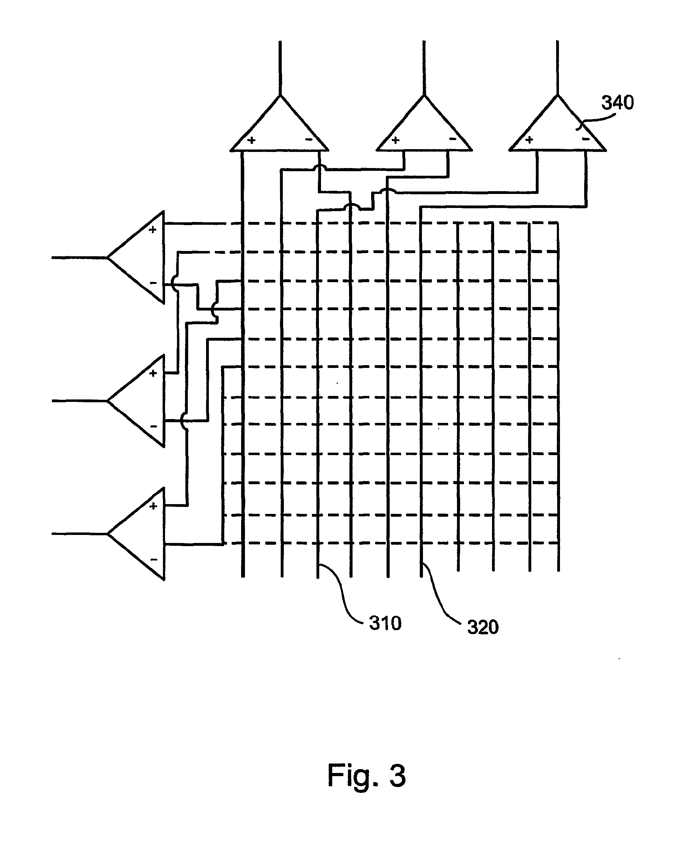

Reference is now made to Fig. 3 showing an array of conductive lines of the digitizer sensor as input to differential amplifiers according to embodiments of the present invention. Separation between the two conductive lines 310 and 320 is typically greater than the width of the finger so that the necessary potential difference can be formed, e.g. approximately 12mm. Typically a finger touch on the sensor may span 2-8 lines, e.g. 6 conductive lines. Typically, the finger hovers over and/or touches the digitizer over a number of conductive lines so as to generate an output signal in more than one differential amplifier, e.g. a plurality of differential amplifier's. However, a finger touch may be detected when placed over one conductive line. Typically a finger and/or hand hovering at a height of about 1 cm - 4 cm above the digitizer can be detected, e.g. 1 cm - 2 cm or 3 cm - 4 cm. The differential amplifier 340 amplifies the potential difference developed between conductive lines 310 and 320. ASIC 16 and digital unit 20 process the amplified signal and determine the location and/or position of the user's finger based on the amplitude and/or signal level of the sensed signal.

In one example, the origin of the user's finger from the two inputs of the differential amplifier is determined by examining the phase of the output. In another example, since a finger touch typically produces output in more than one conductive line, the origin of the user's finger from the two inputs of the differential amplifier is determined by examining outputs of neighboring amplifiers and optionally interpolating is used to find a more accurate value. In yet other examples, a combination of both methods may be implemented.

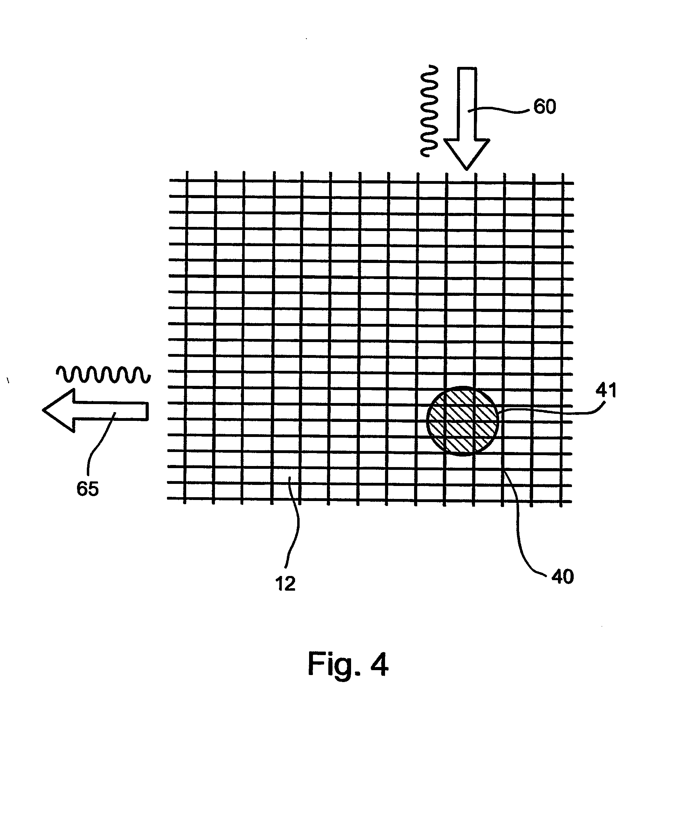

Reference is now made to Fig. 4 which schematically illustrates a capacitive junction touch method for finger touch detection using a digitizer sensor, according to some embodiments of the present invention. At each junction, e.g. a junction 40 in sensor 12 a minimal amount of capacitance exists between orthogonal conductive lines. In an exemplary embodiment, an AC signal 60 is applied to one or more parallel conductive lines in the two-dimensional sensor matrix 12. When a finger 41 touches or hovers over the sensor at a certain position where a signal 60 is induced, the capacitance between the conductive line through which signal 60 is applied and the corresponding orthogonal conductive lines at least proximal to the touch and/or hover position increases and signal 60 is coupled, by the capacitance of finger 41, to corresponding orthogonal conductive lines to produce and an output signal 65. This method is able to detect more than one finger touch and/or hover at the same time (multi-touch). This method further enables calculating touch and/or hover area. In exemplary embodiments of the present invention, each conductive line is input to an amplifier. Optionally, one line is input to a differential amplifier, while the other input to the amplifier is ground. Optionally, both lines of the pair are input to the differential amplifier and a same interrogating signal is transmitted over both lines of the pair. Typically, the presence of a finger touch decreases the coupled signal by 20-30% since the capacitive coupling caused by the finger typically drains current from the lines. The presence of a finger hovering may decrease the couple signal less drastically.

According to some embodiments of the present invention, a finger and/or hand 41 placed in proximity over the digitizer sensor at a height (h), forms a capacitance between the finger and/or hand and sensor 12 through the air, provided that the finger and/or hand is close to the sensor, i.e., for small heights. The presence of the finger and/or hand increases the capacitance between a conductive and the orthogonal conductive line which is at or close to the finger and/or hand position. As the signal is AC, the signal crosses at a junction by virtue of the capacitance of the finger and/or hand from the conductive line to the corresponding orthogonal conductive line forming the junction, and output signal 65 is detected. According to some exemplary embodiments, the digitizer system can simultaneously detect and track a plurality of hovering objects.

It will be appreciated that depending on the size of the finger/hand and the fineness of the mesh of conductors, a plurality of the orthogonal conductors may receive some capacitive signal transfer, and interpolation of the signal between the conductors can be used to increase measurement accuracy.

The present invention is not limited to the technical description of the digitizer system described herein. Digitizer systems used to detect stylus and/or finger touch location may be, for example, similar to digitizer systems described in U.S. Patent No. 6,690,156, U.S. Patent Application Publication No. 20040095333 and/or U.S. Patent Application Publication No. 20040155871. It will also be applicable to other digitized sensor and touch screens known in the art, depending on their construction. In some exemplary embodiment, a digitizer system may include two or more sensors. For example, one digitizer sensor may be configured for stylus detecting and/or tracking while a separate and/or second digitizer sensor may be configured for finger and/or hand detection. In other exemplary embodiments, portions of a digitizer sensor may be implemented for stylus detection and/or tracking while a separate portion may be implemented for finger and/or hand detection.

According to some embodiments of the present invention, pre-defined stylus and finger combination gestures are defined and implemented to execute one or more digitizer and/or system commands. In some exemplary embodiments, a stylus and finger combination gesture is implemented to perform a zoom, scroll, rotate and/or other commands. According to some embodiments of the present invention, commands and/or corresponding combination gestures may be system defined and/or user defined. According to some embodiments of the present invention, system defined gestures are intuitive gestures that emulate the associated command indicated by the gesture.

According to some embodiments of the present invention, features of one or more combination gesture input signals are stored in memory, e.g. digitizer memory incorporated in one or more ASIC units (ASIC 16 and/or ASIC 20) of digitizer system 100. According to some embodiments of the present invention, a database of features to be implemented to recognize one or more combination gestures is stored. Typically, storing is performed at the level of the digitizer sensor. Optionally, the database may be stored in host 22 of the digitizer system. Combination gestures may be pre-defined gestures defined by the system and/or may be user defined gestures.

According to some embodiments of the present invention, recognition of the combination gestures may be performed on the level of the digitizer sensor using processing capability provided by one or more ASIC units and/or other units of the digitizer sensor, e.g. ASIC unit 16 and/or ASIC unit 20. Optionally, recognition is performed at least partially on the level of host 22 using processing capability of the host computer, e.g. memory unit 25.

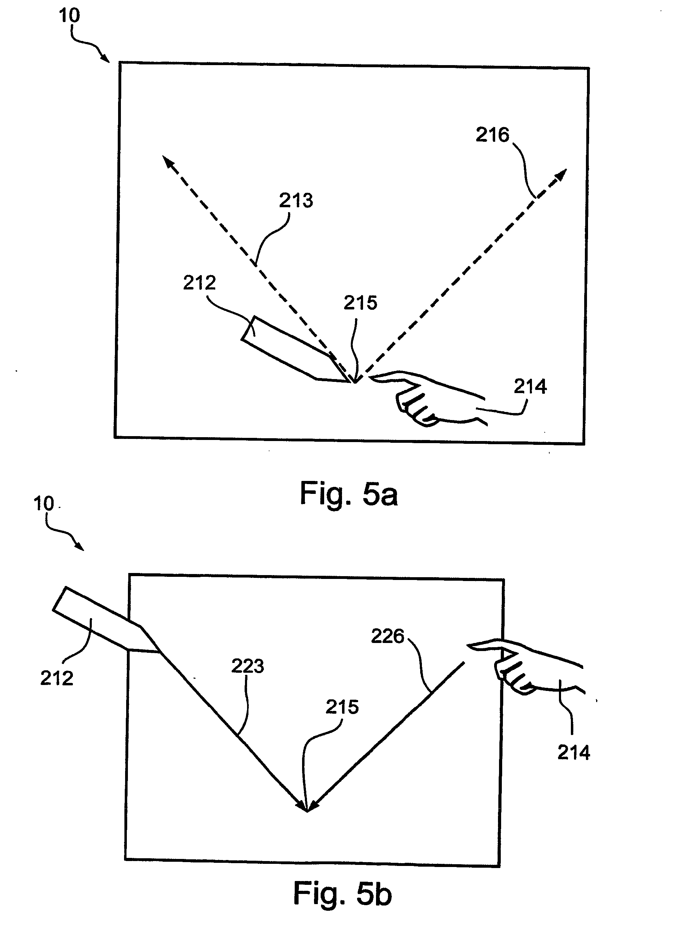

Reference is now made to Fig. 5A and 5B showing exemplary 'zoom in' and 'zoom out' combination gestures using stylus and finger touch according to some embodiments of the present invention. According to some embodiments of the present invention, a 'zoom in' gesture schematically illustrated in Fig. 5A includes input from both a stylus 212 and a finger 214, e.g. substantially simultaneously input. In some exemplary embodiments, the finger and stylus may perform a diverging motion from a common area and/or position 215 on a screen 10 at some angle in the direction of arrows 213 and 216. In some exemplary embodiments, host 22 responds by executing 'zoom in' command in an area surrounding position 215 from which the combination gesture began, e.g. the common area. In other exemplary embodiments, the area between the end points of the 'V' shaped tracking curve defines the area to be zoomed.

According to some embodiments of the present invention, a 'zoom out' combination gesture schematically illustrated in Fig. 5B includes a stylus 212 and a finger 214 substantially simultaneously converging to a common area and/or position 215 from different angles in the direction of arrows 223 and 226. Typically, the tracking curve is a 'V' shaped tracking curve. In other exemplary embodiments, the opposite relationship can be used, e.g. a converging motion may indicate 'zoom in' while a diverging motion may indicate 'zoom out'.

According to some embodiments of the present invention, the digitizer system translates the angle of the 'V' shaped motion to an approximate zoom level. In one exemplary embodiment a wide 'V' shaped angle is interpreted as a large zoom level while a sharp 'V' shaped angle is interpreted in a small zoom level. In one exemplary embodiment, three zoom levels may be represented by sharp medium and wide angle 'V' shaped motion. The angles for each of the zoom levels may be pre-defined and/or user customized. In some exemplary embodiments of the present invention, the system may implement a pre-defined zoom ratio for each new user and later calibrate the system based on corrected values offered by the user. In some exemplary embodiments, the zoom level may be determined separately subsequent to recognition of the zoom gesture, e.g. based on subsequent input by the user. According to some embodiments of the present invention, the 'zoom in' and/or 'zoom out' gesture is defined as a hover combination gesture where the 'V' shaped motion is performed with the stylus and/or finger hovering over the digitizer sensor.

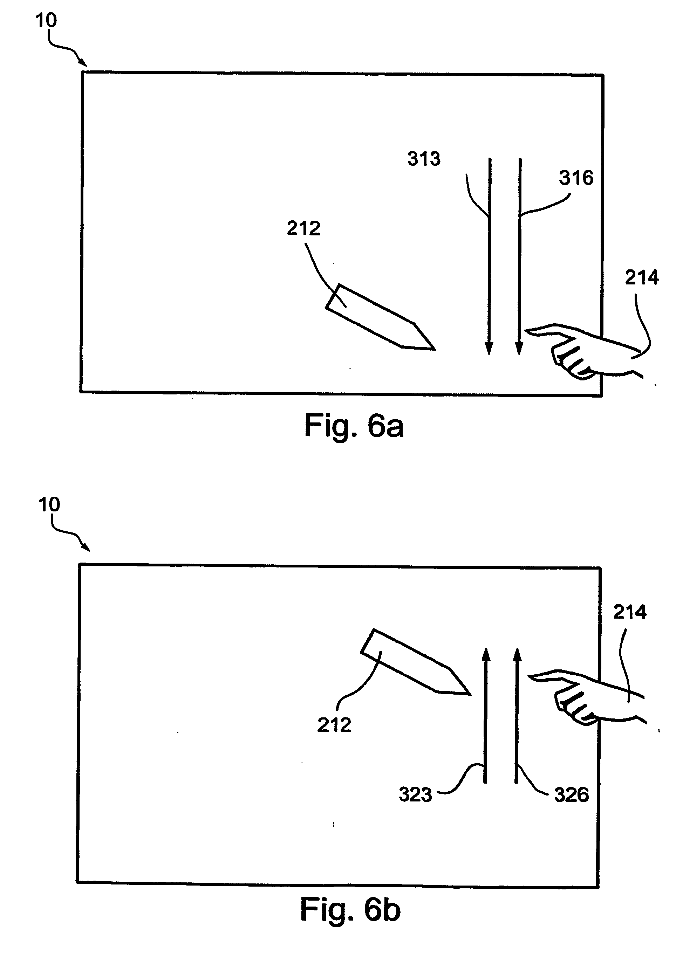

Reference is now made to Fig. 6A and 6B showing exemplary 'scroll up' and 'scroll down' combination gestures using stylus and finger touch according to some embodiments of the present invention. According to some embodiments of the present invention, a 'scroll up' gesture schematically illustrated in Fig. 6A includes stylus 212 and finger 214 substantially simultaneous motioning in a common upward direction as indicated by arrow 313 and 316. The upward direction in this context corresponds to an upward direction in relation to the contents of digitizer system screen 10. According to some embodiments of the present invention, a 'scroll up' gesture schematically illustrated in Fig. 6B includes stylus 212 and finger 214 substantially simultaneously motioning in a common downward direction as indicated by arrow 323 and 326. The downward direction in this context corresponds to a downward direction in relation to the contents of digitizer system screen 10. Optionally, left and right scroll gestures are defined as simultaneous stylus and finger motion in a corresponding left and/or right direction. In response to a recognized scroll gesture, the display is scrolled in the direction of the movement of the stylus and finger. In some exemplary embodiments of the present invention, gestures for combination vertical and horizontal scrolling may be implemented, e.g. simultaneous stylus and finger motion at an angle. In some exemplary embodiments of the present invention, the length of the tracking curve of the simultaneous motion of the stylus and finger in a common direction may be indicative of the amount of scrolling desired and/or the scrolling speed. In one exemplary embodiment, a long tracking curve, e.g. spanning substantially the entire screen may be interpreted as a command to scroll to the limits of the document, e.g. beginning and/or end of the document (depending on the direction). In one exemplary embodiment, a short tracking curve, e.g. spanning less than 1/2 the screen, may be interpreted as a command to scroll to the next screen and/or page. Features of the scroll gesture may be pre-defined and/or user defined. According to some embodiments of the present invention, scrolling may be performed using hover motion tracking such that the stylus and/or finger perform the gesture without touching the digitizer screen and/or sensor.

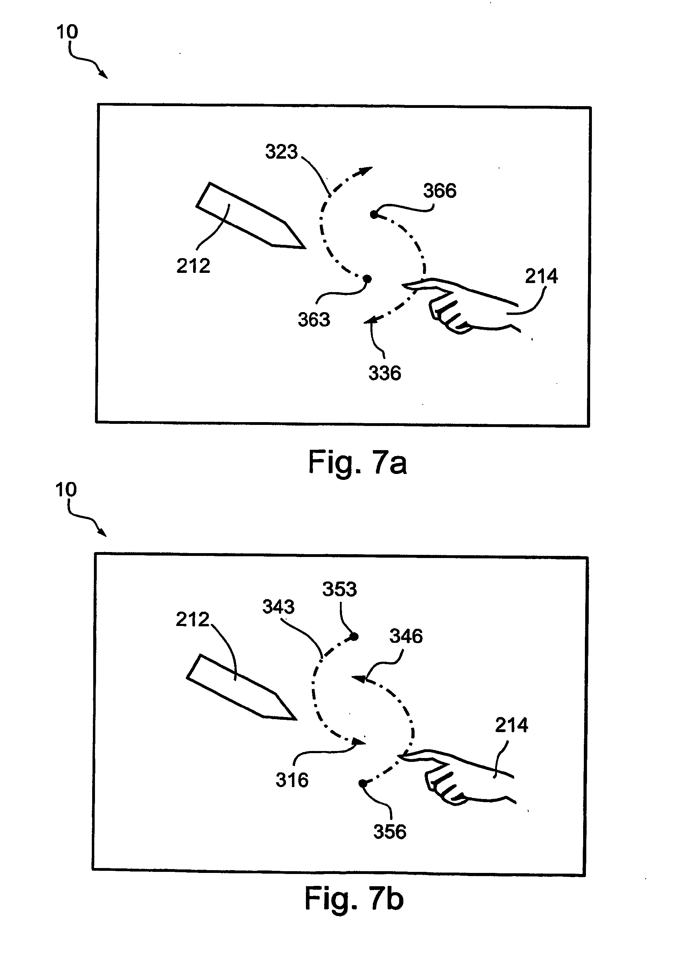

Reference is now made to Fig. 7A and 7B showing exemplary 'rotate clockwise' and 'rotate counter-clockwise' combination gestures using stylus and finger touch according to some embodiments of the present invention. According to some embodiments of the present invention, a 'rotate clockwise' gesture schematically illustrated in Fig. 7A includes stylus 212 and finger 214 substantially simultaneous motioning in a clockwise direction as indicated by arrow 333 and 336, e.g. drawing a curve in a clockwise direction, where the motion originates from vertically spaced positions 363 and 366. According to some embodiments of the present invention, a 'rotate counter-clockwise' gesture schematically illustrated in Fig. 7B includes stylus 212 and finger 214 substantially simultaneously motioning in a counter-clockwise direction as indicated by arrow 343 and 346 from two vertically spaced positions 353 and 356. According to some embodiments of the present invention, the rotational motion is performed from a horizontally spaced origin. According to some embodiment of the present invention, the amount of rotation performed is response to recognition of the gesture is related to the spacing between the points of origin of the stylus and finger. According to some embodiments of the present invention, the amount of rotation performed is responsive to the perimeter length of the tracking curve. According to some exemplary embodiments of the present invention, the combination gesture may be performed with the stylus and/or finger hovering over the digitizer sensor.

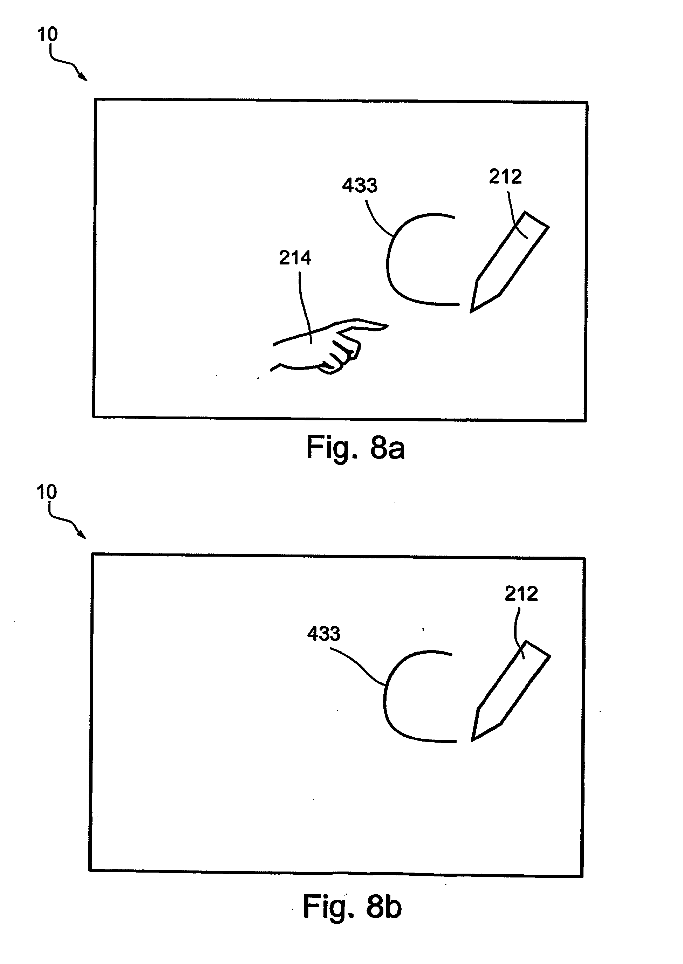

Reference is now made to Fig. 8A showing an exemplary combination gesture that can be distinguished from a similar single user interaction gesture shown in Fig. 8B according to some embodiments of the present invention. According to one exemplary embodiment of the present invention, Fig. 8A illustrates a copy command combination gesture including a stylus 212 and a finger 214 and Fig. 8B illustrates a cut command gesture with a single user interaction, e.g. a stylus 212. In both Fig. 8A and 8B the stylus forms the same gesture, e.g. a 'C' shaped tracking curve 433. The command for copy and cut is distinguished based on input from the finger 214. Recognition of the presence of the finger touch or hovering shown in Fig. 8A indicates a copy command while the absence of the finger touch such as is the case in Fig. 8B indicates that the gesture is a cut gesture. In some exemplary embodiments, the extent of the cut or copy gestures, e.g. how much is cut or copied, may depend on the extent of the gestures.

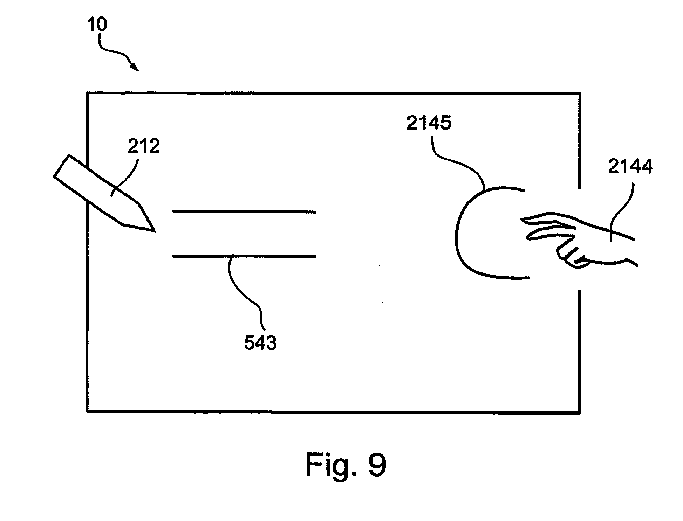

Reference is now made to Fig. 9 showing an exemplary two stage combination gesture according to some embodiments of the present invention. In one exemplary embodiment of the present invention, a two part combination gesture is defined for performing a copy command. In one exemplary embodiment, a copy combined gesture may include two fingers 2144 tracking out a 'C' shape 2145 and subsequently remaining on the screen while stylus 212 underlines a portion of the contents of screen 10 to be copied, e.g. text 543 displayed on the screen. In another exemplary embodiment, a combined gesture for a bold command to bold letters includes performing a pre-defined gesture with a finger while and/or directly after writing letters with the stylus. Letters written will be displayed in bold. Optionally, a gesture may be made with the stylus while the parameter for the gesture may be defined with a finger touch. Optionally, at least one of the user interactions performs a gesture and/or an event while hovering over the digitizer sensor.

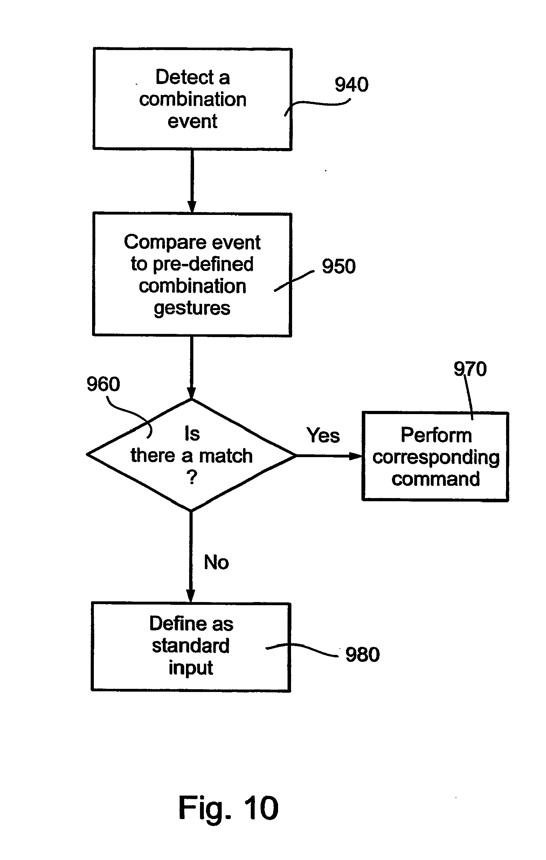

Reference is Figure 10 exemplary flow chart of a method for recognizing a combination gesture according to some embodiments of the present invention. According to some embodiments of the present invention, a combination event including a stylus and a finger touch is detected (block 940). In some exemplary embodiments, the combination event may be a simultaneous stylus and finger event. In some exemplary embodiments, the combination event may be a stylus event that immediately follows a finger event and/or a finger event that immediately follows a stylus event. In some exemplary embodiment, the combination event may include a finger event followed by a simultaneous finger and stylus event or a stylus event followed by a simultaneous finger and stylus event. The detected combination event is compared to pre-defined gestures (block 950). In one exemplary embodiment a gesture recognition engine is implemented to determine if a detected combination event matches one of the pre-defined combination gestures. In some embodiments, the gesture recognition engine and/or its functionality are integrated in the controller of the digitizer sensor, e.g. ASIC 16 and/or ASIC 20. A query is made to determine if the detected combination event is a pre-defined combination gesture, e.g. user defined and/or system pre-defined (block 960). According to some embodiments of the present invention, for a positive match, the corresponding command is applied and/or executed. According to some embodiments of the present invention, when a detected event is recognized as one of the pre-defined combination gestures, an indication is given to the user as to which gesture was recognized prior to executing the relevant command. In one exemplary embodiment, a user may perform a verification gesture to indicate that the recognized gesture is the intended gesture. According to some embodiments of the present invention, for cases when a combination event is not recognized as a pre-defined combination gesture, the event is considered a standard user interaction event and/or standard input (block 980).

It should be further understood that the individual features described hereinabove can be combined in all possible combinations and sub-combinations to produce exemplary embodiments of the invention. Furthermore, not all elements described for each embodiment are essential. In many cases such elements are described so as to describe a best more for carrying out the invention or to form a logical bridge between the essential elements. The examples given above are exemplary in nature and are not intended to limit the scope of the invention which is defined solely by the following claims.

The terms "include", "comprise" and "have" and their conjugates as used herein mean "including but not necessarily limited to".

## Claims

1. A method for detecting gestures with a digitizer, the method comprising:
storing a database of pre-defined gestures, wherein the pre-defined gestures includes input from a body part and an inanimate object, the inanimate object emitting a signal detected by the digitizer;
detecting an event, wherein the event includes input from the body part and the inanimate object;
distinguishing between input from the body part and input from the inanimate object; and
matching input from the event to a pre-defined gesture from the database of pre-defined gestures.

2. The method according to claim 1, wherein at least part of the input from the body part and the inanimate object of the gesture is detected substantially simultaneously.

3. The method according to claim 1 or claim 2, wherein input from one of the body part and the inanimate object is associated with a pre-defined user command and input from the other one of the body part and the inanimate object is associated with a parameter of the pre-defined user command.

4. The method according to any of claims 1-3, wherein the body part is selected from a group consisting of at least one finger and a hand.

5. The method according to claim 4, wherein the input from the body part is a drain in current from the digitizer due to capacitive coupling between the body part and the digitizer.

6. The method according to any of claims 1-5, wherein the inanimate object is selected from a group consisting of a stylus, a conductive object and a game piece.

7. The method according to claim 6, wherein the input from the stylus is an oscillating signal that induces a voltage in the digitizer.

8. The method according to any of claims 1-7, wherein at least part of the input is input derived from touching the digitizer.

9. The method according to any of claims 1-8, wherein at least part of the input is input derived from hovering over the digitizer.

10. The method according to any of claims 1-9 comprising executing a command indicated by the pre-defined gesture from the database.

11. A system for detecting gestures with a digitizer system, the digitizer system comprising:
at least one digitizer sensor configured for detecting an event, wherein the event includes input from both a body part and input from an inanimate object, the inanimate object emitting a signal detected by the digitizer;
a memory unit configured for storing a database of pre-defined gestures, wherein the pre-defined gestures are associated with pre-defined user commands; and
a controller configured for matching inputs from the event with a pre-defined gesture from the database, wherein the controller is operative to distinguish between input from the body part and input from the inanimate object.

12. The system according to claim 11, wherein the digitizer is configured for detecting substantially simultaneous input from the body part and the inanimate object.

13. The system according to any of claims 10-11, wherein the controller is configured for matching input from one of the body part and the inanimate object with the pre-defined user command and the input from the other one of the body part and the inanimate object with a parameter of the pre-defined user command.

14. The system according to any of claims 10-13 comprising a plurality of digitizers wherein the body part and the inanimate object are detected by different digitizers from the plurality of digitizers

## Patentansprüche

1. Verfahren zum Nachweis von Gesten durch einen Digitalumsetzer, wobei das Verfahren Folgendes umfasst:
Speicherung einer Datenbank von vordefinierten Gesten, wobei die vordefinierten Gesten eine Eingabe von einem Körperteil und einem unbelebten Gegenstand umfassen, wobei der unbelebte Gegenstand ein Signal ausgibt, das vom Digitalumsetzer nachgewiesen wird,
Nachweis eines Ereignisses, wobei das Ereignis eine Eingabe vom Körperteil und vom unbelebten Gegenstand umfasst;
Unterscheidung zwischen der Eingabe vom Körperteil und der Eingabe vom unbelebten Gegenstand; und
Abstimmung der Eingabe vom Ereignis mit einer vorbestimmten Geste von der Datenbank von vorbestimmten Gesten,

2. Verfahren nach Anspruch 1, wobei mindestens ein Teil der Eingabe vom Körperteil und dem unbelebten Gegenstand der Geste im Wesentlichen gleichzeitig nachgewiesen wird.

3. Verfahren nach Anspruch 1 oder Anspruch 2, wobei eine Eingabe von einem des Körperteils und des unbelebten Gegenstands mit einem vordefinierten Benutzerkommando assoziiert ist und eine Eingabe von dem anderen des Körperteils und des unbelebten Gegenstands mit einem Parameter des vordefinienen Benutzerkommandos assoziiert ist.

4. Verfahren nach einem der Ansprüche 1 - 3, wobei der Körperteil ausgewählt ist aus der Gruppe bestehend aus mindestens einem Finger und einer Hand.

5. Verfahren nach Anspruch 4, wobei die Eingabe vom Körperteil ein Senkenstrom vom Digitalumsetzer aufgrund der kapazitiven Kopplung zwischen dem Körperteil und dem Digitalumsetzer ist.

6. Verfahren nach einem der Ansprüche 1 - 5, wobei der unbelebte Gegenstand ausgewählt ist aus der Gruppe bestehend aus einem Stift, einem leitfähigen Gegenstand und einer Spielfigur.

7. Verfahren nach Anspruch 6, wobei die Eingabe vom Stift ein oszillierendes Signal ist, das eine Spannung in den Digitalumsetzer induziert.

8. Verfahren nach einem der Ansprüche 1 - 7, wobei mindestens ein Teil der Eingabe von der Berührung des Digitalumsetzers Eingabe-abgeleitet ist.

9. Verfahren nach einem der Ansprüche 1 - 8, wobei mindestens ein Teil der Eingabe vom Schweben über dem Digitalumsetzer abgeleitet ist.

10. Verfahren nach einem der Ansprüche 1 - 9, umfassend die Ausführung eines Kommandos, angegeben durch die vordefinierte Geste aus der Datenbank.

11. System zum Nachweis von Gesten mit einem Digitalumsetzersystem, wobei das Digitalumsetzersystem Folgendes umfasst:
mindestens einen Digitalumsetzer-Sensor, der konfiguriert ist, um ein Ereignis nachzuweisen, wobei das Ereignis einen Eingang sowohl aus einem Körperteil als auch aus einem unbelebten Gegenstand umfasst, wobei der unbelebte Gegenstand ein Signal ausgibt, der vom Digitalumsetzer nachgewiesen wird,
eine Speichereinheit, die konfiguriert ist, um eine Datenbank von vordefinierten Gesten zu speichern, wobei die vordefinierten Gesten mit vordefinierten Benutzerkommandos assoziiert sind; und
eine Steuerungsvorrichtung, die konfigurieit ist, um Eingaben vom Ereignis an einer vordefinierte Geste aus der Datenbank abzustimmen, wobei die Steuervorrichtung betriebsbereit ist, um zwischen einer Eingabe aus dem Körperteil und einer Eingabe aus dem unbelebten Gegenstand zu unterscheiden.

12. System nach Anspruch 11, wobei der Digitalumsetzer konfiguriert ist, um im Wesentlichen gleichzeitig eine Eingabe vom Körperteil und vom unbelebten Gegenstand nachzuweisen.

13. System nach einem der Ansprüche 10 - 11, wobei die Steuervorrichtung konfiguriert ist, um eine Eingabe von einem des Körperteils und des unbelebten Gegenstands mit dem vordefinierten Benutzerkommando abzustimmen und die Eingabe von dem anderen des Körperteils und des unbelebten Gegenstands mit einem Parameter des vordefinierten Benutzerkommandos abzustimmen.

14. System nach einem der Ansprüche 10 - 13, umfassend eine Vielzahl von Digitalumsetzern, wobei der Körperteil und der unbelebte Gegenstand von verschiedenen Digitalumsetzern der Vielzahl von Digitalumsetzern nachgewiesen werden.

## Revendications

1. Procédé de détection de gestes avec un numériseur, le procédé comprenant :
le stockage d'une base de données de gestes prédéfinis, les gestes prédéfinis incluant des entrées provenant d'une partie du corps et d'un objet inanimé, l'objet inanimé émettant un signal détecté par le numériseur ;
la détection d'un événement, l'événement incluant des entrées provenant de la partie du corps et de l'objet inanimé ;
la distinction entre l'entrée provenant de la partie du corps et l'entrée provenant de l'objet inanimé ; et
la mise en correspondance de l'entrée provenant de l'événement avec un geste prédéfini de la base de données de gestes prédéfinis.

2. Procédé selon la revendication 1, dans lequel au moins une partie des entrées provenant de la partie du corps et de l'objet inanimé du geste est détectée sensiblement simultanément.

3. Procédé selon la revendication 1 ou la revendication 2, dans lequel l'entrée provenant de l'un de la partie du corps et de l'objet inanimé est associée à une commande utilisateur prédéfinie et l'entrée de l'autre de la partie du corps et de l'objet inanimé est associée à un paramètre de la commande utilisateur prédéfinie.

4. Procédé selon l'une quelconque des revendications 1 à 3, dans lequel la partie du corps est sélectionnée dans un groupe constitué d'au moins un doigt et d'une main.

5. Procédé selon la revendication 4, dans lequel l'entrée provenant de la partie du corps est un courant drain provenant du numériseur en raison du couplage capacitif entre la partie du corps et le numériseur.

6. Procédé selon l'une quelconque des revendications 1 à 5, dans lequel l'objet inanimé est choisi dans un groupe constitué d'un stylet, d'un objet conducteur et d'une pièce de jeu.

7. Procédé selon la revendication 6, dans lequel l'entrée provenant du stylet est un signal oscillant qui induit une tension dans le numériseur.

8. Procédé selon l'une quelconque des revendications 1 à 7, dans lequel au moins une partie de l'entrée est une entrée dérivée d'un contact avec le numériseur.

9. Procédé selon l'une quelconque des revendications 1 à 8, dans lequel au moins une partie de l'entrée est une entrée dérivée d'un passage sur le numériseur.

10. Procédé selon l'une quelconque des revendications 1 à 9, comprenant l'exécution d'une commande indiquée par le geste prédéfini provenant de la base de données.

11. Système de détection de gestes avec un système numériseur, le système numériseur comprenant ;
au moins un capteur numériseur configuré pour détecter un événement, l'événement incluant à la fois une entrée provenant d'une partie du corps et une entrée provenant d'un objet inanimé, l'objet inanimé émettant un signal détecté par le numériseur ;
une unité de mémoire configurée pour stocker une base de données de gestes prédéfinis, les gestes prédéfinis étant associés à des commandes utilisateurs prédéfinies ; et
un contrôleur configuré pour faire correspondre les entrées provenant de l'événement avec un geste prédéfini provenant de la base de données, le contrôleur étant opérationnel pour effectuer la distinction entre l'entrée provenant de la partie du corps et l'entrée provenant de l'objet inanimé.

12. Système selon la revendication 11, dans lequel le numériseur est configuré pour détecter sensiblement simultanément les entrées provenant de la partie du corps et de l'objet inanimé.

13. Système selon l'une quelconque des revendications 10 et 11, dans lequel le contrôleur est configuré pour faire correspondre l'entrée provenant de l'un de la partie du corps et de l'objet inanimé avec la commande utilisateur prédéfinie et l'entrée provenant de l'autre de la partie du corps et de l'objet inanimé avec un paramètre de la commande utilisateur prédéfinie.

14. Système selon l'une quelconque des revendications 10 à 13, comprenant une pluralité de numériseurs, dans lequel la partie du corps et l'objet inanimé sont détectés par des numériseurs différents de la pluralité de numériseurs.
